Europäisches Patentamt

European Patent Office

Office européen des brevets

(19)

(11) Publication number: **0 260 848 B1**

# EUROPEAN PATENT SPECIFICATION

(45) Date of publication of patent specification: **20.05.92** (51) Int. Cl.⁵: **B29C 61/02**, A22C 13/02

(21) Application number: **87307801.8**

(22) Date of filing: **03.09.87**

(54) **Improvements in or relating to heat-shrinkable tubular film material.**

(30) Priority: **17.09.86 GB 8622332**
     **10.02.87 GB 8703018**

(43) Date of publication of application:
     **23.03.88 Bulletin 88/12**

(45) Publication of the grant of the patent:
     **20.05.92 Bulletin 92/21**

(84) Designated Contracting States:
     **DE ES FR GB IT LU NL**

(56) References cited:
     EP-A- 0 180 666      DE-A- 2 505 207
     FR-A- 2 081 903      GB-A- 1 088 551
     US-A- 2 010 626      US-A- 2 641 022
     US-A- 3 396 426      US-A- 3 399 423
     US-A- 3 679 435      US-A- 3 932 080

(73) Proprietor: **W.R. Grace & Co.-Conn.**
     **1114 Avenue of the Americas**
     **New York New York 10036(US)**

(72) Inventor: **Christensen, Knud Erik**
     **Via Roma 128**
     **Pregnana Mil. (MI)(IT)**
     Inventor: **Scapoli, Tiziano**
     **Via Milano 41**
     **21040 Sumirago (Varese)(IT)**

(74) Representative: **Collier, Jeremy Austin Grey et al**
     **J.A.Kemp & Co. 14, South Square Gray's Inn**
     **London WC1R 5EU(GB)**

Rank Xerox (UK) Business Services
(3.08/2.19/2.0)

## Description

The present invention relates to the manufacture and use of heat-shrinkable tubular film material, for example for use in the packaging field. However, the present invention can also be employed in other applications of tubular film material.

The heat-shrinkable plastics film is made in the form of tubing which has been inflated while heated to its orientation temperature, thereby allowing the expansion of the film to occur with the film retaining a memory of its pre-expansion configuration. Subsequent application of heat will release the thermal shrink energy stored in the film, causing the film to shrink back towards its starting configuration.

One end use, in the packaging field, for heat-shrinkable plastics tubing which must have a constant "inflated" diameter and/or a constant shrink potential is where the tubing may be welded transversely at regular intervals and used to define end-sealed plastics bags of heat-shrinkable nature. Such bags can be used for enclosing a product under vacuum or with a slight residue of an inert or other conditioning gas, and subsequently heat shrunk to provide a tidy finished package.

It is known that in the manufacture of such heat shrinkable tubular material it is difficult to provide tight tolerances on the diameter of the film material. For example, depending on the particular material used, the width of a flat-folded tube or tape which is nominally 150 mm in width can vary by up to plus or minus 40 mm. At best such a width may vary by plus or minus 15 mm (i.e. + 10%). The difficulty arises in that rendering the tubular material heat-shrinkable involves the steps of expanding a bubble of the film material, while at its orientation temperature, and then rapidly chilling the material in that expanded form to "freeze" the memory of its original configuration into the crystalline structure of the film. Precise control of the internal pressure of the bubble, which will govern the expanded diameter of the tubular material, is difficult. Also it has been found that heatshrinkable tubular films have a tendency to shrink back uncontrollably during the first 48 hours after orientation inflation.

Another disadvantage of known forms of heat-shrinkable tubular film material, particularly for the packaging industry, is that the tubular material may be used as a stuffed tubular casing to pack products of a wide range of diameters, whereas the manufacture of the shrinkable tubular material in large quantities is best achieved with a very limited number of diameters of the material, and hence it has in the past been uneconomic to produce many different sizes of the film material, bearing in mind the very expensive plant required to extrude the material in molten tubular form and then, after chilling, to carry out the bubble expansion process at orientation temperature.

DE-A-2505207 discloses the processing of a pre-formed tube by passing it over a size ring and subjecting it to localised external heat in order to anneal the heatshrinkable film over part of its circumference, to reduce its shrink potential over that part of the circumference. Despite the gap (shown in Figure 1) between the tubular film 10 and the ring 4, the disclosure on page 8 of DE-A-2505207 specifically excludes any reduction of calibre during this asymmetrical annealing (see "ohne Schrumpfung in Längs- und seitlichen Richtungen" at lines 16 and 17 and "erleidet keinerlei bemerkenswerte Wärmeschrumpfung" at lines 18 and 19). In subsequent use, the film is subjected to shrinking heat which will curl the film into a crescent-shaped configuration.

The pre-characterising portions of claims 1, 9 and 10 are based on DE-A-2505207.

EP-A-0180666 discloses the use of radiant heat to heat the tops of the ridges formed during a shirring operation, in order to impart irregularities to the film stock when withdrawn from a shirred stick and stuffed with product material such as sausage meat.

It is the object of the present invention to overcome the above-mentioned disadvantages of the prior art heatshrinkable film material.

In accordance with a first aspect of the present invention there is provided a process as defined in claim 1.

By recovering part of the thermal shrink potential before final use of the heat-shrinkable film material, it is possible to achieve much more precise control of the dimensions (in particular the width of the flat-folded tubular film or tape), in that the part-shrunk material, having been heat shrunk in contact with a calibrated former, has a known diameter which corresponds to the particular pre-shrinking diameter of the tubular film material appropriate for its end use. Furthermore, whereas it is difficult to guarantee any particular post-expansion diameter of the tubular film material at the end of the heat shrinkability-imparting bubble expansion process (because of the difficulty of control of the internal pressure in the bubble within very fine tolerances, and possibly as a result of uncontrolled shrink-back as mentioned earlier) the fact that the diameter is calibrated by shrinking into mechanical contact with a known size of former, preferably with cooling on the former, provides a much more precise control. The finished film material nevertheless has

2

adequate residual thermal shrink potential to allow heat shrinking of the tubular film material in the final use, for example for allowing the tubular film material when used as a packaging casing to be shrunk down onto the product therewithin.

In one form of the process, the former may be a mandrel around which the film is disposed during its partial heat-shrinking operation so that the film shrinks into contact with the mandrel. The cooling may, furthermore, be by way of cooling of the mandrel itself in order to "fix" the calibre at the desired value.

In another form of the process, the former may be a sleeve surrounding the film, and into contact with which the film is expanded by inflation while being subjected to shrinking heat which partially shrinks the film down to the calibre imposed by the surrounding sleeve.

A second aspect of the present invention provides apparatus as defined by claim 9.

A third aspect of the present invention provides apparatus as defined by claim 10.

The partially heat shrunk tubular film material may be stored in the form of shirred sticks, or rolls, or any other convenient form, for subsequent use, and sticks of different diameters are formed by differently shrinking a starting film of one nominal calibre.

By shirring the tubular casing material in its fully expanded form, when the film has its minimum thickness, it is possible to shirr the material much more tightly than hitherto, bearing in mind the diameter of the product to be packed. By "tightness" of shirring, we refer to the shirring ratio which is expressed in terms of the length of the shirred stick as a proportion of the length of the tubular film material which has been compressed into the shirred stick form.

When the tubular film material is shirred, the shirring ratio will be controlled by the film thickness and hence if as an example it is desired to provide a shirred stick which can be used to package product material which would normally require a film or tape having a flat-folded width of, for example, 90 mm, and the shirred stick is formed of a film which has a width of 150 mm, with the intention of heat-shrinking the film down to 90 mm before packing, then a much greater quantity of film material can be incorporated into the shirred stick. Bearing in mind that for stuffing casing material it is traditional to take a shirred stick of a predetermined length and to mount that around the stuffing horn at the start of each batch of product material to be stuffed, the longer the time of operation between the exchange of shirred sticks, the more economic the use of the apparatus will become. There are therefore considerable commerical advantages available with the process of the present invention.

When the tubular film material is to be used as stuffed casing stock, partially heat-shrinking the tubular film material before stuffing with a pasty product, and selecting an appropriate diameter of a stuffing horn and appropriate shrinking temperature, make it possible to allow one size, or only a very few different sizes, of tubular casing material to be used for packaging a wide variety of product dimensions. For example, simply by changing the diameter of the exterior of the stuffing horn portion onto which the tubular casing material is heat shrunk, and by changing the shrinking parameters accordingly, it is possible to achieve many different calibres for the film material at stuffing, in a way which was not readily possible in current manufacture of heat-shrinkable tubular casing material.

As a further advantage of the process, it is possible to apply the partial shrinking heat locally at one part of the periphery of the tubular film material and hence to cause differential shrink which is particularly suitable in the manufacture of stuffed ring-shaped or "crescent-shaped" products such as certain meat sausages.

A further advantage of the present invention is that the diameter of the shirred stick used to feed the heat shrinkable tubular film material is considerably greater than hitherto for a particular stuffing diameter and hence it is possible to allow the diameter of the stuffing horn to be greater for the majority of its upstream part, hence reducing the friction of the material being stuffed and allowing higher throughput rates.

A fourth aspect of the invention provides a process as defined by claim 17.

In order that the present invention may more readily be understood the following description is given, merely by way of example, with reference to the accompanying drawings in which:-

FIGURE 1 is a side elevational view of a stuffing apparatus showing a shirred stick of tubular casing material loosely fitted around a stuffing horn and being subjected to a shrinking operation in which a part of the total shrink potential is recovered while bringing the tubular casing material down to a desired diameter appropriate for the product being fed from a stuffing unit, through the stuffing horn, to a clipping unit at which the casing material is clipped at each end and severed to form predetermined tubular products, for example meat sausages;

FIGURE 2 is a side elevational view of a first embodiment of apparatus for adjusting the thermal shrink potential to produce rolled tubular film material having a predetermined calibration more accurate than can be achieved with the prior art apparatus;

FIGURE 3 is a view corresponding to Figure 2 but showing the apparatus during an alternative part of its operating cycle;

FIGURE 4 is a purely schematic view showing the case of modified apparatus in the manufacture of the film material in shirred stick form, with an appropriate diameter for the end use required of the shirred material; and

FIGURE 5 is a side elevational, partly schematic, view of a further embodiment of apparatus for adjusting the shrink potential of flat-folded heat-shrinkable tubular film, in accordance with the present invention.

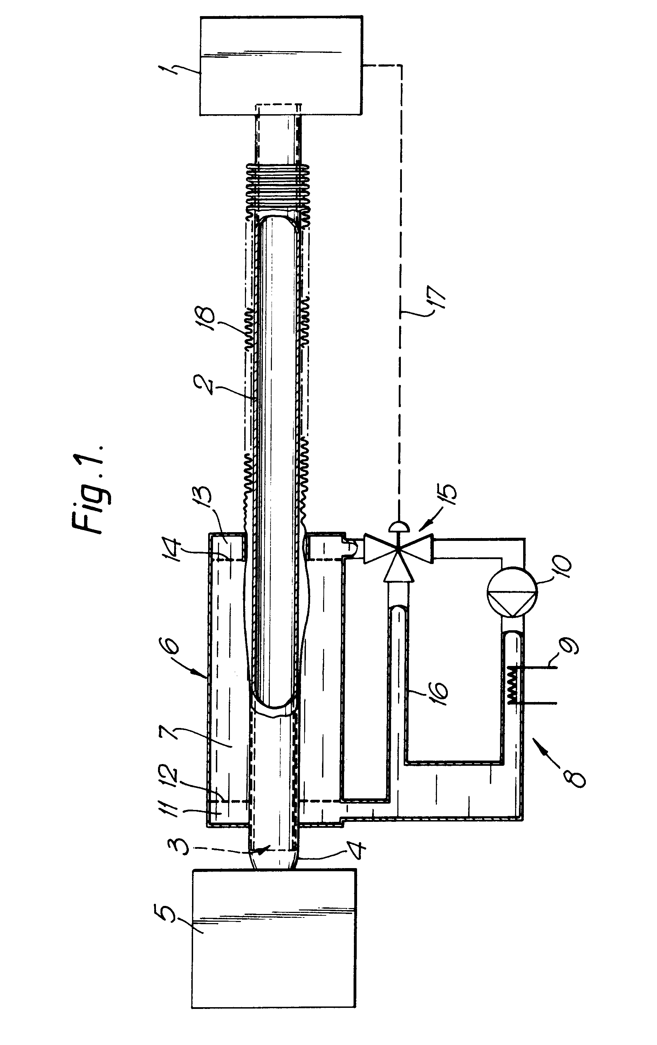

Referring now to the drawings, there can be seen from Figure 1 a stuffing apparatus in which product material, for example meat emulsion, is advanced under pressure from a stuffing unit 1 along the interior of a stuffing horn 2 to an outlet 3 of the stuffing horn where the material enters tubular casing material 4 to urge it into a clipping unit 5 where the tubular casing material has a clip applied at its leading end and ultimately a pair of closely spaced clips at a downstream location in order to define (a) with the first-mentioned clip a stuffed tubular casing of predetermined length closed by the first clip of the pair, and (b) a leading-end clip (the second clip of the pair) for the next product.

In accordance with the present invention, the tubular film material is subjected to a partial shrinking operation in a shrinking unit 6 which uses a shrinking medium, in this case hot air, in a chamber 7 where the shrinking medium is in contact with the exterior of the film and causes it to shrink down to conform with the external diameter of the outlet portion 3 of the tubular stuffing horn 2, serving as a shrink-limiting mandrel.

As shown in Figure 1, the shrinking unit 6 is associated with a circulation circuit 8 for the hot shrinking medium. The circuit 8 includes heating means 9 and a circulation pump 10 which normally cause the hot shrinking medium, in this case air, to enter an inlet chamber 11 having a permeable wall 12 through which the shrink medium passes into the main shrinking chamber 7. After it has carried out its shrinking operation, the cooled shrinking medium returns to the pump 10 by way of an outlet chamber 13 having a permeable wall 14 separating it from the main chamber 7, and then passes by way of a flow control valve 15.

Advantageously the shrinking medium circuit 8 includes a recycle conduit 16 communicating with the valve 15, and the valve is of three-way construction and is controlled by a schematically illustrated control line 17 connected to the stuffing unit 1. If for any reason the apparatus is stopped, for example because of an interruption at the clipping unit, the stuffing unit will sense lack of movement of the product along the stuffing horn 2 and will immediately generate a signal on the line 17 to isolate the outlet chamber 13 from the return circuit 8 and to open the recycle line 16 so that the pumped shrinking medium circulates within the "standby" circuit including the recycle line 16. As soon as product is ready to flow again, line 16 is isolated from the valve 15 and the output chamber 13 is re-opened so as to resume flow of shrinking medium through the main shrinking chamber 7 and to resume the task of shrinking the casing material.

As shown in Figure 1, the inlet chamber 11 and the outlet chamber 13 are both of annular construction but the outlet chamber 13 has a larger diameter at its internal wall, in order to allow the tubular casing material to expand away from contact with the adjacent external surface of the cold stuffing horn, for the purposes of allowing uniform shrink.

The use of hot air as the shrinking medium is particularly advantageous since the action of the circulating fan (pump 10) results in a reduced air pressure in the outlet chamber 13 and main shrinking chamber 7 (as compared with the atmospheric pressure between the casing and the stuffing horn) which is expected to act to draw the tubular casing material radially away from the stuffing horn exterior until the transverse shrink force overcomes this pressure differential.

The advantages of the apparatus shown in Figure 1, and of the process of packaging using this apparatus, include the fact that the tubular casing material which is provided in the form of a stick 18 having only one diameter or one of a very limited range of diameters can be shrunk to different extents dependent upon (a) the diameter of the stuffing horn outlet portion 3 which serves as a mandrel onto which the tubular casing material is shrunk, and (b) the shrink temperature imparted by the hot shrinking medium in the main chamber 7. Thus the stuffing horn portion 3 may be replaced by one of a different diameter (possibly with a change in the part of the shrinker 6 incorporating the inlet chamber 11) in order to switch from one casing calibre to another. On the other hand, this allows the expensive plant, in which the tubular casing material is manufactured and given its heat-shrinkability, to continue to produce the heat-shrinkable tubular casing material of a single nominal calibre in large quantities without needing to be shut down to vary the diameter of the material. In this way it is possible firstly to ensure that the maximum productivity of the manufacturing apparatus can be achieved, and secondly it is possible for stocks of the shirred tubular casing material 18 to be kept at a minimum since there is no need to stock various different sizes of the material when the calibre of the material at stuffing can be controlled by the end user, in this case the operator of the stuffing plant.

A further variation of the process shown in Figure 1 is one where the tubular casing material may, without being immediately stuffed, be partially shrunk from its starting diameter to a diameter which will be appropriate for subsequent stuffing or for any other end use of heat-shrinkable tubular film material. In this process there is no need for a hollow mandrel since the partially shrunk material having been given its new, partially reduced, calibre is then shirred or rolled or pre-clipped before further use. In that event it is possible, if desired, to shrink the material by application of heat internally of the tubular film material, i.e. from within the mandrel on which the calibration operation occurs.

If desired, a hollow mandrel with the application of heat from within to achieve shrinking may be used as an alternative to Figure 1 when stuffing during shrinking is carried out. However, the Figure 1 arrangement, using externally applied heat, is preferred.

The present invention thus envisages not only a packaging process in which the tubular casing material is partially shrunk to a desired calibre while moving along the stuffing horn, but also the possibility of partially shrinking tubular casing material which is then either rolled or shirred, or stored in some other convenient form, before further use. The thus stored material will, of course, still retain part of its shrink potential.

As indicated above, the fact that the tubular casing material in the shirred stick 18 at the right hand end of the stuffing horn in Figure 1 has a reduced wall thickness compared with the tubular casing material leaving the downstream end 3 of the stuffing horn 2 means that firstly the stick 18 is a much looser fit on the stuffing horn and hence the time required for replenishing the stick 18 is reduced as compared with prior art sticks, and hence a higher rate of utilisation of the stuffing unit and clipping unit can be realized. Furthermore, it is possible to derive further advantage from the use of the partial shrinking operation while stuffing, in that the same reduced wall thickness allows a much higher shirring ratio than hitherto and hence the time of utilisation of the apparatus shown in Figure 1 between replenishment of the shirred sticks 18 is greater than hitherto, given a particular length of shirred stick 18, in that the stick in question will contain a longer length of casing material when the wall thickness is reduced than it would if the shirred stick 18 contained material which was not shrunk before stuffing.

Yet a further option is for the diameter of the inlet portion of the stuffing horn 2 around which the shirred stick 18 is placed to be increased in order to allow greater throughput of the product material. It is known that the throughput W of emulsion to be stuffed can be expressed by the relation

$$W = K \times \frac{D^4 \times P^3}{L^2 \times V^3}$$

where
K = dimensional constant
D = horn inside diameter,
P = stuffing pressure,
L = horn length,
V = emulsion viscosity,

As can be seen, the important parameters of the stuffing horn and their effect on the efficiency of the stuffing operation are that the throughput varies directly as the fourth power of the internal diameter of the stuffing horn and inversely as the square of the length of the stuffing horn. By ensuring that along most of its length the stuffing horn has a larger diameter than is appropriate at the downstream end 3, and throughput of material can be increased, allowing more enconomic use of the stuffing apparatus 1, 2, 5.

It will of course be understood that a stuffing horn should accept the maximum possible length of shirred stick but nevertheless have its overall length kept to a minimum in order to optimize the throughput rate, so the shrink unit 6 of Figure 1 should be kept as short as possible in the axial direction. It may be, for example, that the length can be reduced by using a higher thermal capacity shrink medium, for example hot water or any other hot liquid.

It will of course be appreciated that during use of the apparatus shown in Figure 1 it is important for the rate of advance of the film material to be carefully controlled through the shrinking unit 6 so that the dwell time is adequate to achieve the desired degree of shrinking. This will of course depend on the rate of advance of the meat emulsion being stuffed into the casing since it is the advance of this emulsion which effects, and hence controls, the rate of advance of the tubular casing.

Furhtermore, to obtain loosely or tightly stuffed product, the resistance to movement of the tubular casing material 4 leaving the downstream end 3 of the stuffing horn 2 must be controlled and traditionally this control is effected by use of an external friction brake which resists movement of the casing material. However, in accordance with the present invention the fact that the tubular casing material is being shrunk down into contact with the outlet portion 3, which itself serves as a calibrating mandrel to control the calibre of the finished casing material, means that friction is generated and this reduces the need for braking with the traditional external casing brake. This is particularly advantageous when using externally printed tubular casing material because the traditional friction brake has been known to mar the printing whereas the use of the interior of the tubular casing material as the braked surface avoids this problem.

Furthermore, the fact that the tubular casing material is being shrunk down into contact with the outlet portion 3 to exactly the same dimension means that it is expected to form a better seal preventing air from entering through the inside of the casing and the stuffing horn 3 into the package. This can be a problem when using the traditional casing brake, as the casing material is of larger dimensions than the stuffing horn and thus forms folds through which air can enter the package, particularly during the production of loosely stuffed packages.

In the apparatus shown in Figure 1, longitudinal shrink is prevented by a brake (which is not shown in the drawing but which could readily be devised by the man in the art).

A possible variation of the apparatus shown in Figure 1 is one in which the main chamber 7 is located only on one side of the stuffing horn and where also controlled longitudinal shrink is performed, and thus the rectilinear shaped tubular casing is converted on the stuffing horn into a non-rectilinear shaped tubular casing for ring-shaped products.

As indicated above, the possibility of controlling the calibre of tubular film material by starting with a heat-shrinkable material and then recovering part of its shrink potential while shrinking onto a known mandrel has the advantage of considerably improving the quality of packages leaving the manufacturing plant. However, as sizing mandrel for this partial shrink recovery, there is no need to use the conventional hollow stuffing horn which of necessity operates in batch-wise manner because of the problem of introducing the stuffing material into the interior of the tubular material. The process may instead be carried out continuously on an endless run of tubular film material using a simple mandrel.

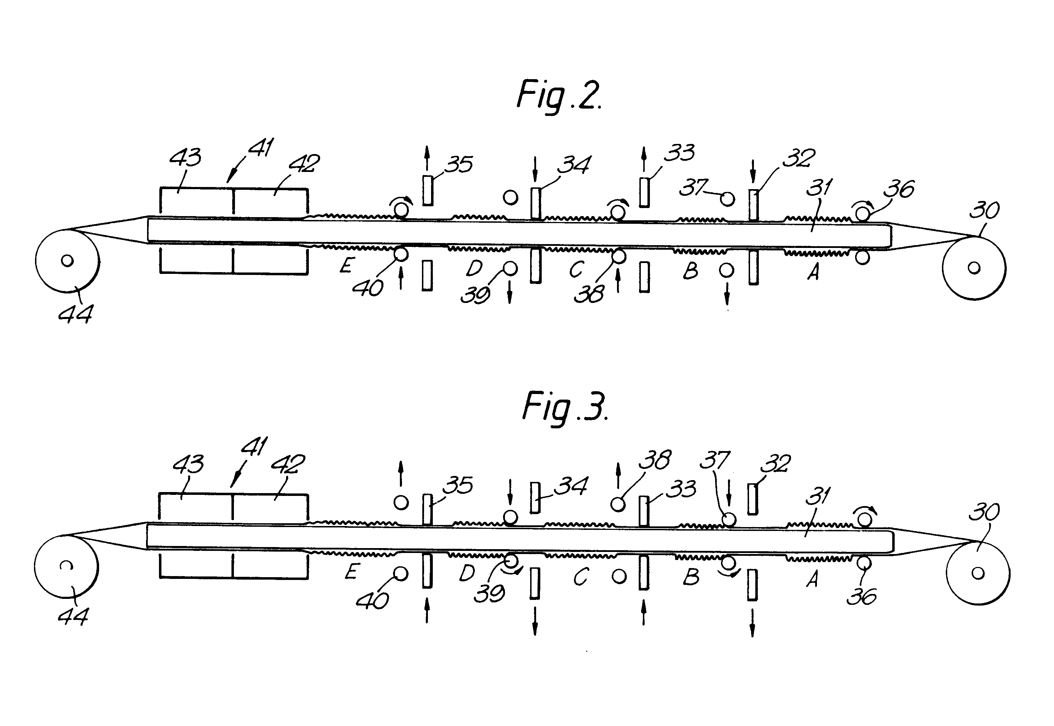

One plant arrangement for this process is illustrated in Figures 2 and 3 where a supply roll 30 of tubular film material feeds the material to the right hand end of a forming mandrel 31. It will of course be understood that the supply roll 30 will normally need to be changed once one roll has been depleted, and that instead it is possible for the apparatus to be fed from the downstream end of continuous tube production plant involving extrusion with subsequent cooling, hot bath and racking stages to achieve the orienting bubble stretching operation.

In order to operate continuously on the tubular film material, the apparatus shown in Figure 2 has four sets of clamping blocks 32, 33, 34 and 35. These sets of clamping blocks operate in pairs so that, as shown in Figure 2, while the sets of blocks 32 and 34 are closed onto the mandrel 31 to support it both longitudinally and transversely (i.e. to carry its weight) the other sets of blocks 33 and 35 can be released. Figure 3 shows that in an alternative part of the cycle the sets of blocks 32 and 34 are released while the sets of blocks 33 and 35 carry the mandrel.

Associated with the mandrel are various film advancing roller sets 36, 37, 38, 39 and 40. The action of these roller sets is to form various shirred locations at A, B, C, D and E along the mandrel, and to advance film from one such shirred location to the next in a predetermined sequence.

In Figure 2, while the sets of clamping blocks 32 and 34 are closed the feed roller sets 36, 38 and 40 are each advancing material into the immediately downstream shirred build-up A, C and E. The roller set 36 is taking film from the supply roll 30 whereas the roller sets 38 and 40 are taking film from the preceding shirred build-ups B and D, respectively.

As shown in Figure 2, while the roller sets 36, 38 and 40 are operating the intervening roller sets 37 and 39 are inoperative.

Once the build-ups B and D have been depleted or substantially depleted, the operating state of the sets of blocks 33 and 35 is changed to hold the mandrel whereupon the other sets of blocks 32 and 34 can be operated to release the mandrel. At the same time the roller sets 38 and 40 stop operating while the rollers 37 and 39 begin to operate to rebuild the shirred build-ups B and D which were depleted during the preceding phase. In doing so they in turn deplete the shirred build-ups A and C which were formed by the rollers 36 and 38 during the preceding phase.

As can be seen from Figures 2 and 3, the upstream advancing roller set 36 remains in contact with the mandrel at all times to maintain a substantially constant rate of paying out of the film material from the supply roll 30 (or in other words a substantially constant rate of advance of the film material from any other

EP 0 260 848 B1

supply source). Likewise, the build-up E is all the time being depleted by the heat shrinking operation carried out at the shrinking unit 41 which has a heating chamber 42 followed by a cooling chamber 43 to effect the necessary partial shrinking and subsequent cooling of the tubular film material once the desired calibre has been attained by shrinking it onto the downstream or left hand end of the mandrel 31.

It will of course be understood that the shrinking unit 41 of Figures 2 and 3 may operate in substantially the same way as the shrinking unit 6 shown in Figure 1, although it has been modified by the addition of a special cooling stage.

The need for a cooling stage in the apparatus of Figure 1 is not acute since the relatively low temperature of the meat emulsion being pumped from the stuffing unit into the clipping unit will keep the downstream end of the stuffing horn 3 cool. Because of the lack of any flow of cooling material through the interior of the mandrel 31 in Figures 2 and 3, an external cooling stage 43 is advantageous if not essential.

At the downstream end of the apparatus of Figures 2 and 3 is a film winding unit 44 to take-up the now slightly shrunk film material having a much tighter tolerance of calibre. However, it will of course be understood that the winding unit 44 may be followed by, or replaced by, a shirring unit to supply shirred sticks of tubular film material having this more precisely controlled calibre.

Various other possibilities exist for locating the mandrel 31 in the apparatus where the shrinking unit is operating on a continuous or semi-continuous basis and it will therefore be realized that one such system has been illustrated in Figures 2 and 3 by way of example.

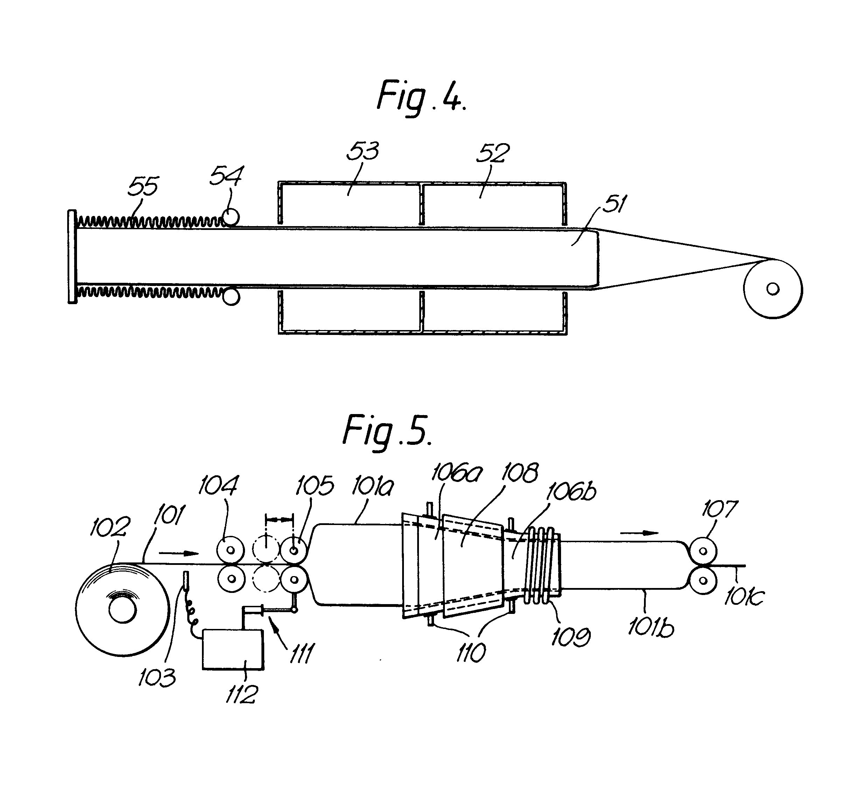

Figure 4 shows very schematically a variation of Figure 2 in which the partially shrunk tubing from the shrinking chamber 52 is cooled at 53 and then shirred by rollers 54 to form a stick 55 for storage and then delivery to a stuffing plant. The mandrel 51 is held in place by means which are not shown in the drawing but which could readily be devised by the man in the art.

Figure 5 shows a continuous length of flat-folded heat-shrinkable tubing 101 paid out from a supply roll 102 and passing a sensor 103 on its way to a static pair of pinch rolls 104. The sensor 103 measures the width of the flat-folded film and provides a signal indicative of variation in the width of that film.

The flat-folded film 101 then passes to a movable pair of pinch rolls 105 which define the start of a bubble 101a in the film.

The periphery of the bubble reduces as the inflated tubing passes a shrink-controlling encircling member 106a, 106b from which the inflated bubble emerges with a reduced periphery as a finished bubble 101b to pass between a further static pair of pinch rolls 107 from which it emerges as flat-folded finished tubing 101c.

In the illustrated embodiment of the present invention the encircling shrink-controlling member is in the form of a convergent conical collar 106a which includes a surrounding heating jacket 108 for a heating medium to maintain the temperature of the conical collar at a desired value to prompt the desired partial shrinking of the film 101 pasing therethrough.

A downstream portion 106b of the shrink-controlling collar is of generally cylindrical form and is cooled by coolant in coils 109.

The shrink-controlling member 106a, 106b is supported at 110.

The temperature of the heating medium flowing around the convergent part 106a of the collar is appropriate to achieve limited shrink to reduce the periphery of the bubble down from the dimensions of the pre-shrinking or inlet bubble 110a down to the corresponding dimensions of the post-shrinking or outlet bubble portion 110b. The reduction in diameter of the conical collar 106a is consistent with the mean amount of shrink expected.

It may be that the width of the tubing on supply roll 102 varies as a result of manufacturing tolerances, and this could result in the inflated bubble 101a varying in pressure, since the volume of air within the entire bubble trapped between the pinch rolls 105 and the the outlet pinch rolls 107 is substantially constant.

In order to compensate for any such variations, and thereby to keep the pressure of the gas bubble within the film to a substantially constant value, the inlet pinch roll pair 105 defining the start of the inflated bubble portion 101a is movable towards and away from the shrink-controlling collar 106a, 106b under the influence of the tubing width variation sensor. Thus, for an extreme reduction of tubing width from a maximum value to a minimum value, the movable pinch roll pair 105 would be controlled to move away from the shrink-controlling collar from the solid line position to the broken line position shown in the drawing. This movement is actuated by a ram 111 under the influence of a controller 112 connected to the tubing width sensor 103.

It will of course be appreciated that, whereas the width of the starting film material 101 may vary considerably as a result of manufacturing tolerances, the ability of the apparatus illustrated in the drawing to maintain a substantially constant pressure in the inlet bubble portion 101a and consequently a substantially uniform pressure in the outlet bubble portion 101b which is dimensionally controlled by the diameter of the cylindrical collar portion 106b, ensures that the finished flat-folded film 101c has much greater uniformity of dimension than the starting material 101 coming from the tubing roll 102.

As indicated above, with reference to Figures 1 to 3, the method and apparatus in accordance with the present invention can be used for reducing the shrink potential from a maximum value of manufactured film on the tubing roll 102 to a desired value for a particular application. This allows the conversion of a single type of starting stock tubing to be adjusted to several possible desired dimensions and shrink potentials.

Alternatively, as just described, the apparatus and method in accordance with the present invention enable the uniformity of dimension and shrink potential of heat shrinkable plastics tubing to be improved during partial shrinking of the tubing.

The method of starting the process, i.e. of inflating the bubble 101a, 101b, is well known in the art of bubble orientation of heat-shrinkable plastics film and will be well within the ability of the skilled reader. For example, the stationary outlet pinch rolls 107 may be separated while an inflation nozzle is passed between them and into the interior of the film 101 to allow sufficient inflation gas to be introduced into the bubble 101a, 101b. Then, once the inflation nozzle (not shown) is removed and the outlet pinch rolls 107 have been closed together, the bubble will be self-sustaining through the sealing effect of the inlet pinch rolls 105 and the outlet pinch rolls 107 confining the inflation gas to the bubble 101a, 101b.

If, over the long term, the gas is lost from the bubble, then to some extent this can be accommodated by variation of the position of the movable pinch roll pair 105. Alternatively, the long term loss of gas may be adjusted by movement of the outlet pinch rolls 107, thereby maintaining the maximum scope for compensating movement of the inlet pinch rolls 105 under the control of the sensor 103.

Although the embodiment illustrated in Figure 5 uses a heating jacket 108 to heat the convergent shrink-controlling collar 106a, using for example hot water or steam as the heating medium, the heating may instead be derived by using electric heating.

## EXAMPLE

In order to test the feasibility of partially recovering the shrink potential of the film during manufacture or during stuffing, we caried out tests involving taking a pre-stretched heat-shrinkable tubular film material and then partially shrinking it to varying extents, whereupon its flat-folded width was measured.

A first sample of heat shrinkable tubular BT-1 material (a multi-layer laminate of polypropylene copolymer/EVA/barrier layer available from W.R. Grace & Co.) having a flat width of 152 mm and a film thickness of 55 microns was heat shrunk, using hot water, and then cooled in the shrunk form, under various conditions. The temperature of the hot water is given in the first column of Table I.

The tube width and film thickness values in the second column of Table I show the final values when all the free shrink was recovered in one step.

A second sample of the same BT-1 film was then shrunk, at the same set of hot water temperatures, in a two stage operation in which the first stage used a mandrel to limit the diameter reduction upon shrink. The values of tube width and film thickness in mm and microns, respectively, are given in the third column of Table I.

The tube width and film thickness values upon completion of the second stage of shrinking, when all available free shrink was recovered, are shown in the fourth column.

TABLE 1

| TEMPERATURE | FREE SHRINK TO WIDTH, THICKNESS | SHRUNK ON MANDREL TO WIDTH, THICKNESS | RESIDUAL SHRINK TO WIDTH THICKNESS |
|---|---|---|---|
| 80°C | 116 mm 85 microns | 139 mm 60 microns | 116 mm 85 microns |
| 89°C | 103 mm 120 microns | 139 mm 60 microns | 103 mm 120 microns |
| | | 125 mm 67 microns | 103 mm 120 microns |
| 100°C | 87 mm 165 microns | 139 mm 61 microns | 88 mm 165 microns |
| | | 125 mm 67 microns | 88 mm 165 microns |
| | | 94 mm 89 microns | 87 mm 165 microns |

The above tests were then carried out with a tube of BC-1 (a multi-layer laminate of ionomer/EVA/barrier layer also available from W.R.Grace & Co.) of the same thickness but having a flat tube width of 155 mm. The shrinking steps were performed under the same shrink conditions. The results are shown in Table 2.

TABLE 2

| TEMPERATURE | FREE SHRINK TO WIDTH, THICKNESS | SHRUNK ON MANDREL TO WIDTH, THICKNESS | RESIDUAL SHRINK TO WIDTH THICKNESS |
|---|---|---|---|
| 80°C | 122 mm 80 microns | 139 mm 61 microns | 120 mm 80 microns |
| 89°C | 117 mm 110 microns | 139 mm 61 microns | 117 mm 110 microns |
| | | 125 mm 68 microns | 117 mm 110 microns |
| 100°C | 76 mm 190 microns | 139 mm 61 microns | 76 mm 190 microns |
| | | 125 mm 68 microns | 76 mm 190 microns |
| | | 94 mm 91 microns | 76 mm 190 microns |

The results show that with both materials the same total free shrink can be recovered with the single stage free shrinking operation as with the mandrel/free shrink two stage operation. This applies for various extents of the initial shrink operation; in each test the diameter of the tubular film material at the end of the process has substantially attained the diameter which it would have attained if a single shrinking operation had been carried out to recover all the free shrink potential.

Although the present invention has been exemplified so far in terms of a heat-shrinkable tubular casing material, it will of course be understood that heat-shrinkable tubular film material has many end uses which do not necessarily require the clipping operation and stuffing of the material with a pasty product such as a meat emulsion or other food product. For example, the precise control of the calibre of the tubular material may be useful in the manufacture of packaging bags of heat-shrinkable material where the partially shrunk tubular film material may subsequently be used to manufacture bags.

Other end uses such as shrinkable sleeves for sealing the exterior of an article such as a jointed electrical conductor assembly may be improved by use of the present invention to control the calibre of the tubular material.

**Claims**

1. A process for manufacturing and using a tubular film material comprising forming a heat-shrinkable tubular film material, partially heat shrinking the tubular film material (101) into contact with a former (31; 51; 106a,106b) of known dimensions, and then subsequently further heat shrinking the partially shrunk film material in the stuffing of a product into the film material; characterised in that the partial heat shrinking is effected to reduce the calibre of the tubular film material to a modified calibre as the tubular film material is being advanced past the former in contact therewith; in that the shrink conditions during the partial shrinking and the size of the former are selected in order to achieve said desired modified calibre; and in that the further heat shrinking further reduces the calibre of the already shrunk film.

2. A process according to claim 1, characterised in that the tubular film material is manufactured without partial recovery of its thermal shrink potential and the partial heat shrinking operation is carried out by the user.

3. A process according to claim 2, characterised in that the partial shrinking is effected over a stuffing horn from a shirred stick (18).

4. A process according to claim 3, characterised in that the heat applied to effect the partial heat shrinking is applied over only part of the periphery of the tubular film material and the resulting partially heat shrunk material is used as a casing for a crescent-shaped package.

5. A process according to claim 1, characterised in that the partial heat shrinking is carried out during manufacture of the heat shrinkable film material.

6. A method according to claim 5, characterised in that the partially heat shrunk tubular film material is stored for subsequent use, and characterised in that tubes of different diameters are formed by differently heat shrinking a tubular starting film of one nominal calibre.

7. A process according to any one of claims 1 to 6, characterised in that the former is a mandrel (31;51) within the tubular film material and onto which the film material is heat shrunk.

8. A process according to any one of claims 1 to 6, characterised in that the former is an encircling member (106a,106b) around the film and against which the film is inflated during the application of shrinking heat.

9. Apparatus for effecting controlled shrinkage in the manufacture of heat-shrinkable tubular film material comprising a mandrel (31,51), means (36,37,38,39,40;54) for feeding tubular film material onto one end of the mandrel, and means (42;52) beyond said one end of the mandrel for applying shrinking heat to the tubular film material to heat shrink it into contact with the mandrel, giving it a precise modified calibre; characterised by including sets of clamping members (32,33,34,35) for supporting the mandrel (31), the clamping members being driven in alternation so that some of the clamping members are operative while others are inoperative to allow the heat-shrinkable tubular film material being processed to pass from one side of the released clamping members to the other, followed by reversal of the operating states of the clamping members to allow the advance of the tubular film material to proceed on a continuous basis.

10. Apparatus for effecting controlled shrinking in the manufacture of heat-shrinkable tubular film material characterised by means for inflating such tubular film material (101) to form a bubble (101a) and passing it through an encircling member (106a,106b) which contacts the exterior of the film (101) to define a reduced diameter configuration for the film bubble (101a), means (105,107) for confining the inflated bubble (101a) to either side of said encircling member (106a,106b), means (108) for applying shrinking heat to the bubble approaching or contacting said encircling member, and means (109) for subsequently applying cooling to terminate the shrink process when a desired degree of shrinkage has been attained.

11. Apparatus according to claim 10, characterised in that the encircling shrink-controlling member (106a,106b) is heated to apply the shrinking heat to the inflated film.

12. Apparatus according to claim 10 or claim 11, characterised in that said shrink-controlling encircling member has a cooled portion (106b) to define the finished dimensions of the partially shrunk, inflated film.

13. Apparatus according to any one of claims 10 to 12, characterised in that the shrink-controlling encircling member includes a first convergent portion (106a) defining the reduction in dimensions of an inflated film passing through the member, and a second cylindrical portion (106b) defining the finished dimensions of the partially shrunk but still inflated film.

14. Apparatus according to any one of claims 10 to 13, characterised in that said bubble-confining means comprise pinch rolls (105,107) to either side of said shrink-controlling encircling member, means being provided for moving at least one (105) of said sets of bubble-confining pinch rolls relative to the shrink-controlling encircling member (106a,106b).

15. Apparatus according to claim 14, characterised in that the bubble-confining pinch rolls (105) at the upstream side of said shrink-controlling encircling member are movable; and including means (103,111,112) responsive to the width of flat-folded tubing being supplied to said upstream pinch rolls (105), effective to control the spacing of said upstream pinch rolls from the shrink-controlling encircling member (106a,106b) for controlling the inflation pressure within the bubble to improve the consistency of the pressure with time.

**16.** Apparatus according to any one of claims 10 to 15, and further characterised by including means for releasably holding said shrink-controlling encircling member in position, to allow one such encircling member (106a,106b) to be replaced by another of different dimensions, for changing the degree of partial shrink effected by the apparatus.

**17.** A process for forming tubular film material of heat-shrinkable type characterised by reducing the calibre of the material by partially heat shrinking it, and by the fact that said partial heat shrinking leaves residual thermal shrink potential in the material.

**18.** A process according to claim 17, wherein the tubular film material is in the form of a shirred stick of tubular casing material, characterised in that the partial recovery of the thermal shrink potential of the tubular casing material is effected prior to the shirring operation.

**Revendications**

**1.** Procédé de fabrication et d'utilisation d'un matériau de film tubulaire comprenant le formage d'un film tubulaire en matériau thermo-rétractable, la thermo-rétraction partielle du matériau du film tubulaire (101) au contact d'un dispositif de formage (31; 51; 106a, 106b) de dimensions connues, et ensuite la thermo-rétraction ultérieure du matériau de film partiellement rétracté lors du bourrage d'un produit dans le matériau de film; caractérisé en ce que la thermo-rétraction partielle est effectuée pour réduire le calibre du matériau du film tubulaire à un calibre modifié pendant que le matériau du film tubulaire avance devant le dispositif de formage en contact avec celui-ci; en ce que les conditions de rétraction pendant la rétraction partielle et la grandeur du dispositif de formage sont choisis pour réaliser ledit calibre modifié recherché; et en ce que la thermo-rétraction ultérieure réduit encore le calibre du film déjà rétréci.

**2.** Procédé selon la revendication 1, caractérisé en ce que le matériau du film tubulaire est fabriqué sans récupération partielle de son potentiel de rétraction thermique et l'opération de thermo-rétraction partielle est effectuée par l'utilisateur.

**3.** Procédé selon la revendication 2, caractérisé en ce que la rétraction partielle est effectuée par dessus une corne de bourrage d'une tige froncée (18).

**4.** Procédé selon la revendication 3, caractérisé en ce que la chaleur appliquée pour effectuer la thermorétraction partielle est appliquée sur seulement une partie de la périphérie du matériau du film tubulaire et le matériau partiellement thermo-rétracté résultant est utilisé sous la forme d'une gaine pour un emballage en forme de croissant.

**5.** Procédé selon la revendication 1, caractérisé en ce que la thermo-rétraction partielle est effectuée pendant la fabrication du film en matériau thermo-rétractable.

**6.** Procédé selon la revendication 5, caractérisé en ce que le matériau du film tubulaire partiellement thermo-rétracté est stocké pour une utilisation ultérieure et caractérisé en ce que des tubes de diamètres différents sont formés en thermo-rétractant de manière différente un film débutant tubulaire d'un calibre nominal.

**7.** Procédé selon l'une des revendications 1 à 6, caractérisé en ce que le dispositif de formage est un mandrin (31; 51) à l'intérieur du matériau du film tubulaire et sur lequel le matériau du film est thermo-rétracté.

**8.** Procédé selon l'une des revendications 1 à 6, caractérisé en ce que le dispositif de formage est un organe d'encerclement (106a, 106b) autour du film et contre lequel le film est gonflé pendant l'application de la chaleur de rétraction.

**9.** Dispositif pour effectuer le rétrécissement contrôlé dans la fabrication d'un film tubulaire en matériau thermo-rétractable comprenant un mandrin (31,51), des moyens (36,37,38,39,40; 54) pour amener le matériau du film tubulaire sur une extrémité du mandrin, et des moyens (42; 52) au-delà de ladite extrémité du mandrin pour appliquer la chaleur de rétraction au matériau du film tubulaire pour le thermo-rétracter en contact avec le mandrin, en lui conférant un calibre modifié précis; caractérisé en ce qu'il comprend des jeux d'éléments de serrage (32, 33, 34, 35) pour supporter le mandrin (31), les éléments de serrage étant entraînés en alternance de façon que quelques-uns des éléments de serrage fonctionnent pendant que les autres ne fonctionnent pas pour permettre au film tubulaire en matériau thermo-rétractable en cours de traitement de passer d'un côté des éléments de serrage relâchés à l'autre, suivi par l'inversion des états de fonctionnement des éléments de serrage pour permettre l'avance du matériau du film tubulaire de continuer sur une base continue.

10. Dispositif pour effectuer la rétraction contrôlée dans la fabrication d'un film tubulaire en matériau thermo-rétractable, caractérisé par des moyens pour gonfler un tel matériau (101) du film tubulaire pour former une bulle (101a) et de la passer à travers un organe d'encerclement (106a, 1060) qui vient au contact de l'extérieur du film (101) pour définir une configuration de diamètre réduit de la bulle du film (101a), des moyens (105, 107) pour confiner la bulle gonflée (101a) d'un côté et de l'autre dudit organe d'encerclement (106a, 106b), des moyens (108) pour appliquer la chaleur de rétraction à la bulle approchant ou venant au contact dudit organe d'encerclement, et des moyens (109) pour appliquer de manière subséquente un refroidissement pour terminer le processus de rétraction lorsqu'un degré de rétraction recherché est atteint.

11. Dispositif selon la revendication 10, caractérisé en ce que l'organe d'encerclement contrôlant la rétraction (106a, 106b) est chauffé pour appliquer la chaleur de rétraction au film gonflé.

12. Dispositif selon la revendication 10 ou la revendication 11, caractérisé en ce que ledit organe d'encerclement contrôlant la rétraction possède une partie refroidie (106b) pour définir les dimensions finies du film gonflé, partiellement rétréci.

13. Dispositif selon l'une des revendications 10 à 12 caractérisé en ce que l'organe d'encerclement contrôlant la rétraction comprend une première partie convergente (106a) définissant la réduction des dimensions d'un film gonflé passant à travers l'organe, et une deuxième partie cylindrique (106b) définissant les dimensions finies du film partiellement rétréci, mais toujous gonflé.

14. Dispositif selon l'une des revendications 10 à 13, caractérisé en ce que ledit moyen confinant la bulle comprend des rouleaux de pincement (105, 107) de chaque côté dudit organe d'encerclement contrôlant la rétraction, des moyens étant prévus pour déplacer au moins un (105) desdits jeux de rouleaux de pincement confinant la bulle par rapport à l'organe d'encerclement contrôlant la rétraction (106a, 106b).

15. Dispositif selon la revendication 14, caractérisé en ce que les rouleaux de pincement confinant la bulle (105) côté amont dudit organe d'encerclement contrôlant la rétraction sont déplaçables; et comprenant des moyens (103, 111, 112) répondant à la largeur du tubage replié à plat, amené vers lesdits rouleaux de pincement en amont (105), agissant pour commander l'espacement desdits rouleaux de pincement en amont par rapport à l'organe d'encerclement contrôlant la rétraction (106a, 106b) pour commander la pression de gonflage à l'intérieur de la bulle pour améliorer la consistance de la pression avec le temps.

16. Dispositif selon l'une des revendications 10 à 15, et caractérisé en outre en comprenant des moyens pour maintenir en position de façon à pouvoir le relâcher, ledit organe d'encerclement contrôlant la rétraction pour permettre à l'un de ces organes d'encerclement (106a, 106b) d'être remplacé par un autre de dimensions différentes, pour changer le degré de rétraction partielle effectuée par le dipositif.

17. Procédé pour le formage du matériau du type thermo-rétractable du film tubulaire, caractérisé par la réduction du calibre du matériau en le thermo-rétractant partiellement et par le fait que ladite thermo-rétraction partielle laisse subsister un potentiel de rétraction thermique résiduel dans le matériau.

18. Procédé selon la revendication 17, dans lequel le matériau du film tubulaire se présente sous la forme d'un tige froncée d'un matériau de gaine tubulaire, caractérisé en ce que la récupération partielle du potentiel de rétraction thermique du matériau de la gaine tubulaire est effectuée avant l'opération de fronçage.

**Patentansprüche**

1. Verfahren zur Herstellung und Verwendung eines schlauchförmigen Folienmaterials, bei dem ein wärmeschrumpfbares, schlauchförmiges Folienmaterial gebildet, das schlauchförmige Folienmaterial (101) partiell wärmegeschrumpft, so daß es mit einem Former (31, 51, 106a, 106b) mit bekannten Ausmaßen in Kontakt gelangt, und dann anschließend das partiell geschrumpfte Folienmaterial beim Einfüllen eines Produkts in das Folienmaterial weiter wärmegeschrumpft wird, dadurch gekennzeichnet, daß die partielle Wärmeschrumpfung bewirkt wird, um den Innendurchmesser des schlauchförmigen Folienmaterials zu einem veränderten Innendurchmesser zu verringern, wenn das schlauchförmige Folienmaterial an dem Former in Kontakt damit vorbeigeführt wird, die Schrumpfbedingungen während der partiellen Schrumpfung und die Größe des Formers so gewählt werden, daß sich der gewünschte, veränderte Innendurchmesser ergibt, und die weitere Wärmeschrumpfung den Innendurchmesser der bereits geschrumpften Folie weiterhin verringert.

2. Verfahren nach Anspruch 1, dadurch gekennzeichnet, daß das schlauchförmige Folienmaterial ohne partielle Rückgewinnung seines thermischen Schrumpfpotentials hergestellt und der partielle Wärmeschrumpfungsvorgang von dem Anwender durchgeführt wird.

3. Verfahren nach Anspruch 2, dadurch gekennzeichnet, daß die partielle Schrumpfung von einem Kräuselstab (18) über einem Füllhorn bewirkt wird.

4. Verfahren nach Anspruch 3, dadurch gekennzeichnet, daß die zur Bewirkung der partiellen Wärmeschrumpfung angewendete Wärme nur über einem Teil der Peripherie des schlauchförmigen Folienmaterials angewendet und das resultierende, partiell wärmegeschrumpfte Material als Hülle für eine halbmondförmige Packung verwendet wird.

5. Verfahren nach Anspruch 1, dadurch gekennzeichnet, daß die partielle Wärmeschrumpfung während der Herstellung des wärmeschrumpfbaren Folienmaterials durchgeführt wird.

6. Verfahren nach Anspruch 5, dadurch gekennzeichnet, daß das partiell wärmegeschrumpfte, schlauchförmige Folienmaterial zur anschließenden Verwendung gelagert wird und Schläuche mit verschiedenen Durchmesser durch unterschiedliche Wärmeschrumpfung von schlauchförmiger Ausgangsfolie mit einem nominellen Innendurchmesser gebildet werden.

7. Verfahren nach einem der Ansprüche 1 bis 6, dadurch gekennzeichnet, daß der Former ein im Inneren des schlauchförmigen Folienmaterials angeordneter Formkern (31, 51) ist, auf den das Folienmaterial wärmegeschrumpft wird.

8. Verfahren nach einem der Ansprüche 1 bis 6, dadurch gekennzeichnet, daß der Former ein um die Folie angeordnetes Ringelement (106a, 106b) ist, gegen das die Folie während der Anwendung der Schrumpfungswärme aufgebläht wird.

9. Vorrichtung zur Bewirkung einer kontrollierten Schrumpfung bei der Herstellung von wärmeschrumpfbarem, schlauchförmigem Folienmaterial, die einen Formkern (31, 51), Mittel (36, 37, 38, 39, 40, 54) zur Zuführung von schlauchförmigem Folienmaterial auf ein Ende des Formkerns und Mittel (42, 52) hinter diesem einen Ende des Formkerns zur Anwendung von Schrumpfungswärme auf das schlauchförmige Folienmaterial umfaßt, um es wärmezuschrumpfen, so daß es mit dem Formkern in Kontakt gelangt, wodurch ihm ein präziser, veränderter Innendurchmesser gegeben wird, dadurch gekennzeichnet, daß sie Sätze von Klemmelementen (32, 33, 34, 35) zum Halten des Formkerns (31) aufweist, wobei die Klemmelemente alternierend angetrieben sind, so daß einige der Klemmelemente in Betrieb sind, während andere nicht in Betrieb sind, damit das wärmeschrumpfbare, schlauchförmige, Folienmaterial von einer Seite der gelösten Klemmelemente zur anderen weitergeführt werden kann, und anschließend der Betriebszustand der Klemmelemente umgekehrt wird, damit das schlauchförmige Folienmaterial kontinuierlich weiterlaufen kann.

10. Vorrichtung zur Bewirkung einer kontrollierten Schrumpfung bei der Herstellung von wärmeschrumpfbarem, schlauchförmigem Folienmaterial, dadurch gekennzeichnet, daß sie Mittel zum Aufblähen von derartigem schlauchförmigem Folienmaterial (101) zur Bildung einer Blase (101a) und zur Führung durch ein Ringelement (106a, 106b), das das Äußere der Folie (101) berührt, um für die Folienblase (101a) eine Konfiguration mit verringertem Durchmesser zu bilden, an jeder Seite des Ringelements (106a, 106b) Mittel (105, 107) zur Begrenzung der aufgeblähten Blase (101a), Mittel (108) zur Anwendung von Schrumpfungswärme auf die Blase, die sich dem Ringelement nähert oder dieses berührt, und Mittel (109) zur anschließenden Kühlung aufweist, um den Schrumpfungsvorgang zu beenden, wenn ein gewünschter Schrumpfungsgrad erreicht worden ist.

11. Vorrichtung nach Anspruch 10, dadurch gekennzeichnet, daß das die Schrumpfung kontrollierende Ringelement (106a, 106b) erwärmt wird, um die Schrumpfungswärme auf die aufgeblähte Folie anzuwenden.

12. Vorrichtung nach Anspruch 10 oder Anspruch 11, dadurch gekennzeichnet, daß das die Schrumpfung kontrollierende Ringelement einen gekühlten Bereich (106b) aufweist, um die fertigen Ausmaße der partiell geschrumpften, aufgeblähten Folie zu definieren.

13. Vorrichtung nach einem der Ansprüche 10 bis 12, dadurch gekennzeichnet, daß das die Schrumpfung kontrollierende Ringelement einen ersten konvergierenden Bereich (106a), der die Verringerung der Ausmaße einer durch das Element laufenden aufgeblähten Folie bestimmt, und einen zweiten zylindrischen Bereich (106b) aufweist, der die fertigen Ausmaße der partiell geschrumpften, aber noch aufgeblähten Folie bestimmt.

14. Vorrichtung nach einem der Ansprüche 10 bis 13, dadurch gekennzeichnet, daß diese blasenbegrenzenden Mittel an jeder Seite des die Schrumpfung kontrollierenden Ringelements Durchführungsrollen (105, 107) umfassen, wobei Mittel vorgesehen sind, um mindestens einen dieser Sätze von blasenbegrenzenden Durchführungsrollen (105) relativ zu dem die Schrumpfung kontrollierenden Ringelement (106a, 106b) zu bewegen.

15. Vorrichtung nach Anspruch 14, dadurch gekennzeichnet, daß die blasenbegrenzenden Durchführungsrollen (105) an der stromaufwärtigen Seite des die Schrumpfung kontrollierenden Ringelements beweglich sind und Mittel (103, 111, 112) vorhanden sind, die auf die Breite von zu den stromaufwärtigen Durchführungsrollen (105) geführtem, flach gefaltetem Schlauch ansprechen und bewirken, daß der Abstand der stromaufwärtigen Durchführungsrollen von dem die Schrumpfung kontrollierenden Ringelement (106a, 106b) kontrolliert wird, um so den Aufblähdrucks innerhalb der Blase zur Verbesserung der Beständigkeit des Drucks im Laufe der Zeit zu steuern.

16. Vorrichtung nach einem der Ansprüche 1 bis 15, die außerdem dadurch gekennzeichnet ist, daß sie Mittel zum lösbaren Halten des die Schrumpfung kontrollierenden Ringelements in Position aufweist, damit ein derartiges Ringelement (106a, 106b) zur Veränderung des mittels der Vorrichtung bewirkten partiellen Schrumpfungsgrades durch ein anderes mit unterschiedlichen Ausmaßen ersetzt werden kann.

17. Verfahren zur Bildung von schlauchförmigem Folienmaterial des wärmeschrumpfbaren Typs, dadurch gekennzeichnet, daß der Innendurchmesser des Materials verringert wird, indem es partiell wärmegeschrumpft wird, und die partielle Wärmeschrumpfung in dem Material restliches thermisches Schrumpfungspotential übrig läßt.

18. Verfahren nach Anspruch 17, bei dem das schlauchförmige Folienmaterial in Form eines Kräuselstabes aus schlauchförmigem Hüllenmaterial vorliegt, dadurch gekennzeichnet, daß die partielle Rückgewinnung des thermischen Schrumpfungspotentials des schlauchförmigen Hüllenmaterials vor dem Kräuselungsvorgang bewirkt wird.

*Fig.1.*

Fig.2.

Fig.3.

16

Fig. 4.

Fig. 5.